# FASCICULE DE BREVET EUROPEEN

(11) **EP 2 807 339 B1**
(45) Date de publication et mention de la délivrance du brevet: **20.07.2016**
(21) Numéro de dépôt: 12813907.8
(22) Date de dépôt: 07.12.2012
(51) Int. Cl.: F01B 9/04, F02B 75/04

(54) **PISTE DE ROULEMENT A FIXATION PAR CLIP POUR MOTEUR À TAUX DE COMPRESSION VARIABLE**
FAHRWEG MIT KLIPPBEFESTIGUNG FÜR EINEN MOTOR MIT VARIABLEM VERDICHTUNGSVERHÄLTNIS
TRAVEL TRACK HAVING CLIP ATTACHMENT FOR A VARIABLE COMPRESSION RATIO ENGINE

(30) Priorité: 16.12.2011 FR 1161826
(43) Date de publication de la demande: 03.12.2014
(73) Titulaire: MCE-5 Development, 69003 Lyon (FR); Rabhi, Vianney, 69006 Lyon (FR)
(72) Inventeur: RABHI, Vianney, F-69006 Lyon (FR); BIGOT, Sylvain, F-64320 Ideron (FR); DURY, Philippe, 01700 Miribel (FR)
(74) Mandataire: Jeannet, Olivier
(86) Numéro de dépôt international: PCT/FR2012/052835
(87) Numéro de publication internationale: WO 2013/088032

(56) Documents cités:
- WO-A1-03/008783
- US-A1- 2011 048 382
- US-A1- 2011 197 754
- US-A1- 2011 197 848

## Description

La présente invention a pour objet une piste de roulement à fixation par clip pour moteur à taux de compression variable.

On connaît, d'après les brevets internationaux WO 98/51911, WO 00/31377, WO 03/008783 et WO 07/085739 appartenant au demandeur, différents dispositifs mécaniques pour moteur à rapport volumétrique et/ou cylindrée variable.

On remarque que le brevet international WO 98/51911 décrit un dispositif servant à améliorer le rendement global des moteurs à combustion interne à pistons utilisés à charge et régime variables par adaptation en marche de leur cylindrée effective et/ou de leur rapport volumétrique.

Ce type de moteur est également connu de l'homme de l'art sous la dénomination « moteur à taux de compression variable ». C'est cette dénomination qui est retenue dans le texte qui suit.

On constate que selon le brevet international WO 00/31377, le dispositif de transmission mécanique pour moteur à taux de compression variable comprend un piston solidaire dans sa partie inférieure d'un organe de transmission coopérant d'une part avec un dispositif de guidage à roulement, et d'autre part avec une roue dentée solidaire d'une bielle, ladite roue assurant la transmission du mouvement entre ledit piston et ladite bielle et cette dernière étant articulée autour d'une manivelle que comporte un vilebrequin.

Selon ce même brevet, on voit que la roue dentée coopère également avec un organe de commande dont la position verticale réglable par rapport au bloc moteur que comporte le moteur à taux de compression variable permet de contrôler le taux de compression dudit moteur.

On note que, selon le brevet international WO 00/31377, la roue dentée dénommée dans ledit brevet « engrenage » comporte des segments à profil courbe qui sont logés chacun dans une rainure courbe aménagées à mi largeur de chaque secteur denté que comporte ladite roue.

L'appellation « bande de roulement » a ensuite été retenue pour désigner lesdits segments à compter du brevet international WO 03/008783, remplacée par l'appellation « piste de roulement » à compter du brevet international WO 07/085739 portant sur des perfectionnements ou des variantes du même moteur à taux de compression variable.

On note que les pistes de roulement que comporte la roue dentée coopèrent avec d'autres pistes de roulement que comportent respectivement l'organe de transmission et l'organe de commande, le point de contact entre les pistes de la roue et celles desdits organes étant positionné au voisinage du cercle primitif de l'engrenage constitué de ladite roue et desdits organes de sorte que lesdites pistes définissent l'entraxe dudit engrenage et en maîtrisent le jeu de fonctionnement au niveau des dentures.

Le brevet international WO 07/085739 rappelle lui aussi que le jeu minimal de fonctionnement entre les dentures des crémaillères de forte dimension et celles de la roue dentée est déterminé par la localisation des pistes de roulement que comportent lesdites crémaillères et ladite roue.

Selon ce même brevet, lors du fonctionnement du moteur à taux de compression variable, les pistes de roulement des crémaillères et de la roue dentée peuvent être maintenues en contact entre elles au moyen d'un dispositif presseur constitué de moyens de pression solidaires du carter cylindre dudit moteur, lesdits moyens pouvant notamment comporter un ressort et/ou un piston logé dans un cylindre et soumis à une pression hydraulique.

On note que selon le brevet WO 03/008783, les pistes de roulement des organes de transmission et de commande sont réalisées à partir de l'usinage des corps qui constituent lesdits organes. Cette configuration particulière est rendue nécessaire par le besoin de rigidifier lesdits organes, leur rigidité se trouvant significativement renforcée lorsque les pistes de roulement sont intégrées dans la matière constitutive desdits organes.

Toutefois, la réalisation desdites pistes et des joues latérales qui renforcent la rigidité desdits organes rendent impossible l'utilisation de certains procédés de fabrication usuels pour fabriquer les dentures d'engrenage comme une fraise-mère ou une meule de rectification, ces outils circulaires de fort diamètre ayant besoin du dégagement nécessaire pour opérer.

En alternative, il est par exemple possible de recourir à l'ébauche par forgeage de précision des dents de forte dimension desdits organes, puis à l'usinage à grande vitesse ou encore, à l'usinage électrochimique de précision pour finir les dents et les pistes de roulement desdits organes.

On note que l'usinage électrochimique de précision permet de finir lesdites dents desdits organes de transmission et de commande après les avoir cémentées et trempées, avec une précision de l'ordre de quelques microns.

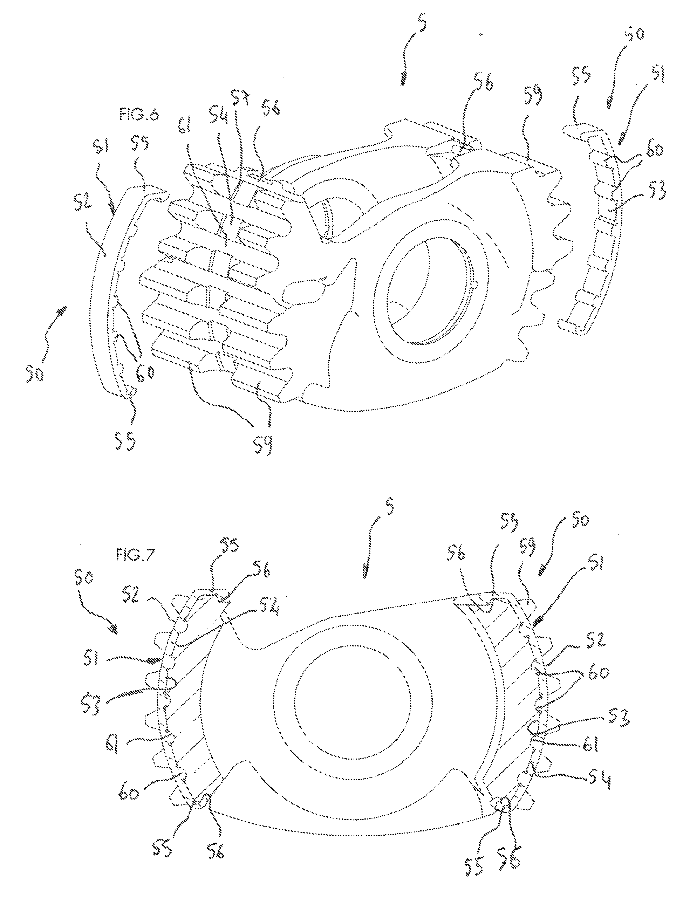

On constate que ces différents brevets ne décrivent toutefois aucun mode de fixation des pistes de roulement sur la roue dentée à l'exception du brevet international WO 00/31377 dont la figure 6 illustre des pistes de roulement à section en queue d'aronde engagées dans une rainure de forme complémentaire aménagée dans la roue dentée.

Cette solution n'a jamais été expérimentée car sa réalisation a été jugée à priori trop complexe et pouvant potentiellement conduire à divers problèmes fonctionnels.

Le brevet international WO 03/008783 indique que le soudage par faisceau d'électrons peut être utilisé comme mode de fixation desdites pistes sur ladite roue, ce procédé ayant été utilisé pour réaliser différents démonstrateurs physiques du moteur à taux de compression variable faisant l'objet des différents brevets d'invention cités en référence.

Les principaux avantages du soudage par faisceau d'électrons sont une mise en oeuvre modérément complexe, un prix de revient acceptable et une faible énergie de soudage qui limite le volume de matière thermiquement affecté.

Cette faible énergie de soudage limite aussi la déformation rémanente de la roue dentée induite par le soudage, ladite déformation affectant l'intégrité géométrique et la performance fonctionnelle de ladite roue.

Malgré ses avantages, la soudure par faisceau d'électron des pistes de roulement sur la roue dentée présente l'inconvénient d'une résistance insuffisante à la fatigue, particulièrement lorsque le moteur à taux de compression variable est utilisé à fortes charges.

Divers essais dudit moteur réalisés par les demandeurs du présent brevet d'invention ont conduit au dessoudage partiel ou total des pistes de roulement fixées sur la roue dentée selon ce procédé.

Les ruptures desdites pistes consécutives à ce dessoudage, accompagnées ou non de la désolidarisation totale ou partielle desdites pistes de la roue dentée, ont conduit à la détérioration voire à la destruction dudit moteur selon que lesdites pistes ou portion de piste désolidarisée(s) sont passée(s) en tout ou partie dans le système d'engrenage dudit moteur.

En outre, le soudage par faisceau d'électrons nécessite un plaquage sans défaut de la piste de roulement sur la roue dentée au moment de la soudure sans quoi ladite soudure serait trop fortement sollicitée durant le fonctionnement du moteur à taux de compression variable. De plus, le soudage par faisceau d'électrons implique de masquer, pendant la phase de cémentation, la partie de la roue dentée exposée au soudage ou bien de prévoir une surépaisseur de matière à enlever par usinage après cémentation et avant soudage, dans la zone de soudage.

En effet, le soudage par faisceau d'électrons est incompatible avec un taux de carbone élevé de l'acier constitutif de la roue dentée ou de celui constitutif de la piste de roulement à souder. Ce masquage nécessaire est mal adapté à la production industrielle de ladite roue car trop complexe et trop coûteux.

En alternative au soudage par faisceau d'électrons, il a été évalué la possibilité de fixer les pistes de roulement sur ladite roue par soudage par laser, par soudage par friction, par soudage par induction, par brasage, par collage ou par tout autre type de soudure ou de liaison fixe connus de l'homme de l'art, y compris tout type d'agrafe élastique.

Ces procédés de mise en oeuvre plus ou moins complexe présentent divers inconvénients et notamment ceux liés à la déformation des pièces soudées entre elles, ou à une résistance insuffisante de la soudure à la fatigue.

D'autres procédés ont également été envisagés pour fixer les pistes de roulement sur la roue dentée du moteur à compression variable et notamment celui qui consiste à réaliser la roue dentée par demi-roues forgées, l'une desdites demi-roues intégrant directement les pistes de roulement de ladite roue au moment de son forgeage, et les deux demi-roues étant ensuite assemblées l'une à l'autre comme revendiqué dans le brevet international WO 03/008783 dont la description précise que l'assemblage desdites deux demi-roues peut se faire - par exemple - par soudage de tous types et notamment par faisceau d'électrons ou par laser, ou par tout procédé de brasage et notamment, le brasage par induction électromagnétique.

Cette dernière méthode consistant à ce que l'une des demi-roues soit porteuse des pistes de roulement intégrées à sa matière assure une excellente tenue desdites pistes sur la roue dentée.

De plus, ladite méthode exclut tout problème de plaquage desdites pistes sur ladite roue nécessaire au moment du soudage desdites pistes sur ladite roue puisqu'il n'y a plus de soudage, mais aussi, lors de la rectification desdites pistes une fois montées sur ladite roue, ou lors du fonctionnement du moteur à taux de compression variable.

En revanche, le principe de la demi-roue porteuse des pistes de roulement intégrées à sa matière présente l'inconvénient de restreindre les procédés de fabrication utilisables pour finir les dents de la roue dentée car la présence desdites pistes sur ladite roue très tôt dans sa gamme d'usinage exclut l'usage d'une roue ou fraise de taillage ou de rectification pour finir lesdites dents.

En alternative, on peut par exemple utiliser un taillage au couteau et une finition par roue à raser, ces deux procédés étant à priori plus coûteux et moins précis que les outils plus conventionnels d'usinage des engrenages.

En outre, le matériau utilisé pour les pistes de roulement ne peut pas être différent de celui utilisé pour réaliser la roue dentée puisque lesdites pistes sont réalisées à partir du même lopin de matière que ladite roue, ce qui exclut de l'optimiser en fonction des besoins spécifiques propres auxdites pistes.

Il en est de même pour le traitement de surface et le traitement thermique desdites pistes qui ne peuvent être que difficilement différents de ceux de la roue dentée, lesdites pistes étant définitivement solidaires de ladite roue.

Une autre méthode peut consister à réduire le diamètre extérieur des pistes de roulement de la roue dentée de sorte que ledit diamètre soit sensiblement inférieur au diamètre de pied des dents que comporte ladite roue.

Cette méthode rend simultanément possible l'intégration desdites pistes dans la matière de la roue dentée et l'utilisation d'une roue de taillage ou de rectification pour réaliser les dentures de ladite roue.

L'inconvénient de cette méthode, c'est d'éloigner du cercle primitif dudit système d'engrenage la surface de contact des différentes pistes de roulement que comporte ledit système.

Cet éloignement introduit une importante composante de glissement au niveau du roulement opéré au point de contact entre les différentes pistes de roulement dudit système, ladite composante conduisant à un accroissement de l'énergie dissipée par frottement par ledit système, et ledit accroissement réduisant le rendement mécanique du moteur à taux de compression variable.

C'est pour résoudre cet ensemble de problèmes que la piste de roulement à fixation par clip pour moteur à taux de compression variable selon l'invention prévoit :
- D'être montée sur la roue dentée une fois celle-ci entièrement terminée ;
- De ne nécessiter aucune soudure pour sa fixation sur la roue dentée, et à ce titre, d'éliminer tout risque de déformation thermique ou d'altération des caractéristiques mécaniques de ladite roue ;
- De rendre utilisable tout procédé d'usinage par fraise-mère et meule de rectification pour tailler et finir les dents de la roue dentée ;
- D'être démontable et remontable si nécessaire ;
- D'être robuste et d'assurer au moteur à taux de compression variable un fonctionnement durable sur au moins l'entière durée de vie d'un véhicule automobile sans aucun risque de désolidarisation de la piste de roulement de ladite roue dentée ;
- De pouvoir si nécessaire être réalisée dans une matière différente de celle de la roue dentée, et de subir un traitement de surface et un traitement thermique différents de ceux de ladite roue ;
- De rester parfaitement plaquée sur la roue dentée de sorte que son diamètre reste le plus constant possible quel que soit la charge du moteur à taux de compression variable ;
- De garantir un point de contact entre les différentes pistes de roulement du système d'engrenage, positionné au plus proche du cercle primitif dudit système ;
- D'être économiquement avantageuse du fait de la simplicité des procédés et processus nécessaires à sa fabrication et à son montage.

Ainsi, la piste de roulement à fixation par clip pour moteur à taux de compression variable suivant la présente invention comprend :
- Au moins un segment courbe dont la surface extérieure coopère avec une piste de roulement aménagée sur l'organe de transmission ou sur l'organe de commande du moteur à taux de compression variable et dont la surface intérieure est maintenue en contact avec une surface extérieure courbe aménagée sur la roue dentée dudit moteur ;
- Au moins un clip, aménagé à l'une au moins des extrémités du segment courbe, et qui se fixe à l'une ou l'autre des extrémités de la surface extérieure courbe aménagée sur la roue dentée en s'accrochant à une forme en crochet ou en protubérance que comporte ladite roue au voisinage de ladite extrémité de sa surface extérieure courbe, ladite forme en crochet ou en protubérance étant complémentaire à celle du clip de sorte à pouvoir coopérer avec lui.

La piste de roulement à fixation par clip suivant la présente invention comprend un segment courbe qui est maintenu latéralement sur la surface extérieure courbe aménagée sur la roue dentée par au moins une butée d'arrêt latéral qui empêche ledit segment de se déplacer parallèlement à son axe de courbure.

La piste de roulement à fixation par clip suivant la présente invention comprend un segment courbe dont la butée d'arrêt latéral est constitué d'au moins un rebord aménagé sur au moins un coté de la surface extérieure courbe aménagée sur la roue dentée.

La piste de roulement à fixation par clip suivant la présente invention comprend un segment courbe dont le rebord aménagé sur au moins un coté de la surface extérieure courbe que comprend la roue dentée comporte des embrèvements au niveau des pieds des dents que comporte la roue dentée.

La piste de roulement à fixation par clip suivant la présente invention comprend un segment courbe dont la surface intérieure comporte des plots d'arrêt longitudinal et/ou latéral qui coopèrent par imbrication avec des plots ou rainures en relief inverse que comporte la surface extérieure courbe aménagée sur la roue dentée.

La piste de roulement à fixation par clip suivant la présente invention comprend un segment courbe dont l'une au moins des extrémités est fixée à la roue dentée par l'intermédiaire d'une liaison d'ancrage mécanique.

La piste de roulement à fixation par clip suivant la présente invention comprend un segment courbe dont la surface intérieure et/ou la surface extérieure courbe aménagée sur la roue dentée comporte des motifs géométriques en relief et/ou en creux qui permettent à de l'huile de lubrification que contient le carter du moteur à taux de compression variable de circuler entre ladite surface intérieure et ladite surface extérieure courbe.

La piste de roulement à fixation par clip suivant la présente invention comprend un segment courbe coopérant avec une cale d'épaisseur qui est intercalée entre ledit segment et la surface extérieure courbe aménagée sur la roue dentée.

La piste de roulement à fixation par clip suivant la présente invention comprend un segment courbe qui est maintenu longitudinalement sur la surface extérieure courbe aménagée sur la roue dentée par au moins une butée d'arrêt longitudinal qui empêche ledit segment de tourner autour de son axe de courbure.

La description qui va suivre en regard des dessins annexés, donnés à titre d'exemples non limitatifs permettra de mieux comprendre l'invention, les caractéristiques qu'elle présente, et les avantages qu'elle est susceptible de procurer :

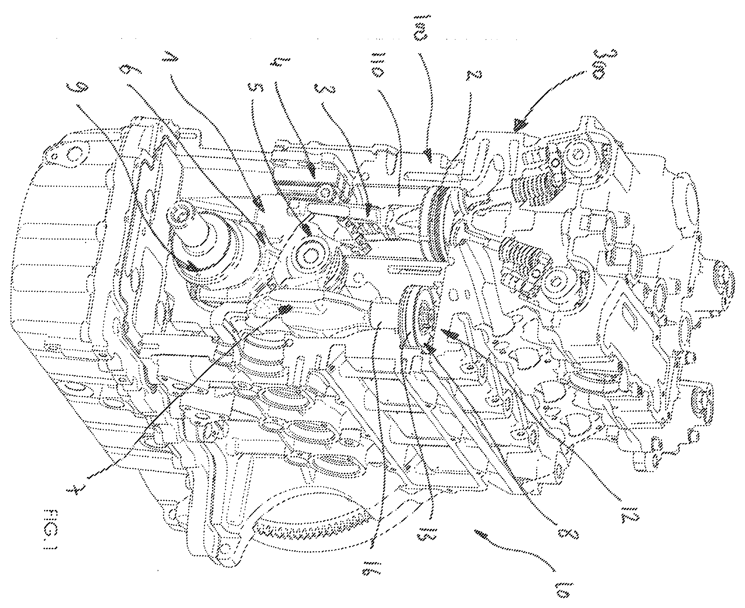

Figure 1 illustre un moteur à taux de compression variable qui comporte la piste de roulement à fixation par clip suivant l'invention.

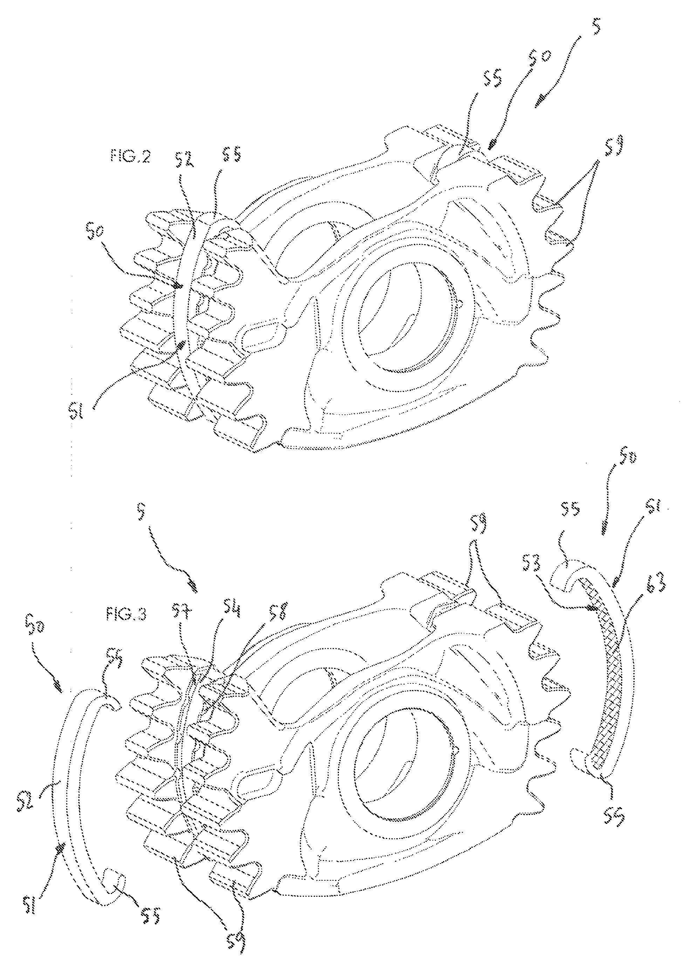

Figures 2 et 3 sont des vues en perspective de la piste de roulement à fixation par clip suivant la présente invention et de la roue dentée sur laquelle elle est montée, respectivement montée et démontée de ladite roue dentée que comporte le moteur à taux de compression variable.

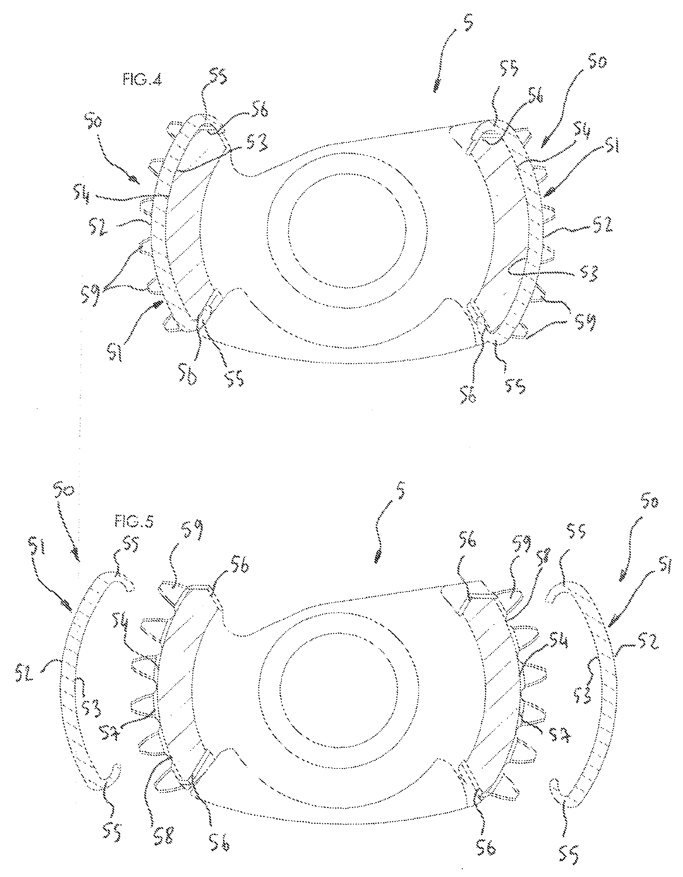

Figures 4 et 5 sont des vues latérales en coupe de la piste de roulement à fixation par clip suivant la présente invention et de la roue dentée sur laquelle elle est montée, respectivement montée et démontée de ladite roue dentée que comporte le moteur à taux de compression variable.
Figures 6 et 7 sont des vues respectivement en perspective éclatée et latérale en coupe de la piste de roulement à fixation par clip suivant la présente invention et de la roue dentée sur laquelle elle est montée, lorsque la surface intérieure du segment courbe comporte des plots d'arrêt longitudinal et/ou latéral qui coopèrent par imbrication avec des plots ou rainures en relief inverse que comporte la surface extérieure courbe aménagée sur la roue dentée.

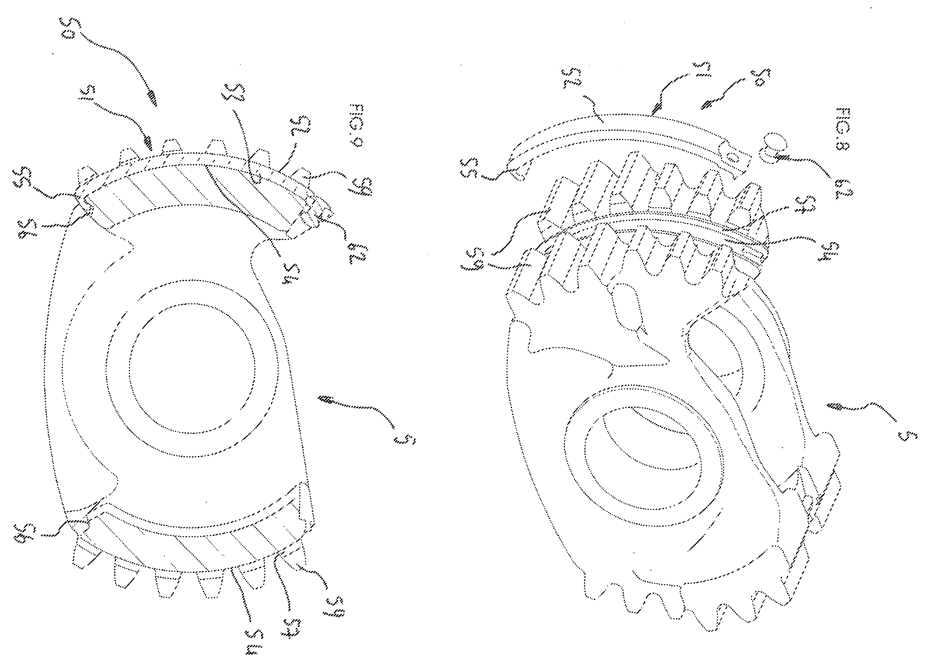

Figures 8 et 9 sont des vues respectivement en perspective éclatée et latérale en coupe de la piste de roulement à fixation par clip suivant la présente invention et de la roue dentée sur laquelle elle est montée, illustrant l'une des extrémités du segment courbe qui est fixée à la roue dentée par l'intermédiaire d'une liaison d'ancrage mécanique.

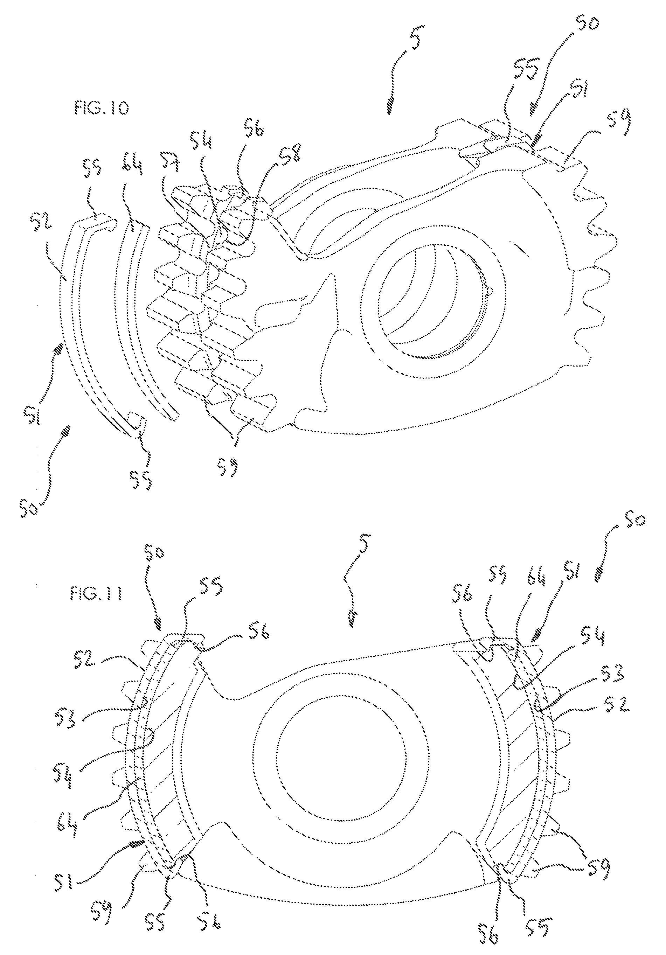

Figures 10 et 11 sont des vues respectivement en perspective éclatée et latérale en coupe de la piste de roulement à fixation par clip suivant la présente invention et de la roue dentée sur laquelle elle est montée, selon une variante qui prévoit que le segment courbe coopère avec une cale d'épaisseur qui est intercalée entre ledit segment et la surface extérieure courbe aménagée sur la roue dentée.

On a montré en figure 1 un bloc moteur ou carter cylindres 100 qui comprend au moins un cylindre 110 dans lequel se déplace un piston de combustion 2 au moyen d'un dispositif de transmission 1 et des moyens de pression qui permettent de maintenir en position les principaux composants mobiles d'un moteur à taux de compression variable 10.

Le dispositif de transmission mécanique 1 comporte dans la partie inférieure du piston de combustion 2 un organe de transmission 3 solidaire dudit piston et coopérant, d'une part avec un dispositif de guidage à roulement 4, et d'autre part avec une roue dentée 5.

La roue dentée 5 coopère avec une bielle 6 reliée à un vilebrequin 9 afin de réaliser la transmission du mouvement entre le piston de combustion 2 et ladite bielle 6.

La roue dentée 5 coopère à l'opposé de l'organe de transmission ou crémaillère de piston 3 avec un organe de commande ou crémaillère dite crémaillère de commande 7 dont la position verticale par rapport au carter cylindres 100 est pilotée par un dispositif de contrôle 12 comportant un vérin de commande 8, dont le piston de vérin 13 est guidé dans un cylindre de vérin aménagé dans le carter cylindres 100 et fermé dans sa partie supérieure par une culasse commune 300.

Le vérin de commande hydraulique à double effet 8 comporte au-dessus du piston de vérin 13 une chambre supérieure de vérin et en dessous du piston dudit vérin 13 une chambre inférieure de vérin, lesdites chambres ayant une cylindrée différente l'une de l'autre à même course du piston de vérin 13.

Le vérin de commande hydraulique à double effet 8 est constitué d'une tige inférieure de vérin 16 solidaire de la crémaillère de commande 7 et d'une vis de serrage pourvue d'une tête de serrage logée dans la chambre supérieure de vérin et permettant de fixer le piston de vérin 13 sur ladite tige inférieure de vérin 16 de la crémaillère de commande 7.

On a représenté en figures 2 à 5 une roue dentée 5 comportant au moins une piste de roulement 50 qui est constituée d'au moins un segment courbe 51 comprenant une surface extérieure 52 qui coopère avec une piste de roulement, non représentée, aménagée sur l'organe de transmission 3 ou sur l'organe de commande 7 du moteur à taux de compression variable 10.

Le segment courbe 51 comporte une surface intérieure 53 qui est maintenue en contact avec une surface extérieure courbe 54 aménagée sur la roue dentée 5 du moteur à taux de compression variable 10.

La surface extérieure 52 et/ou intérieure 53 dudit segment courbe 51 peut être plate, bombée ou de profil complexe dans le sens parallèle ou perpendiculaire à l'axe de courbure dudit segment.

La surface extérieure 52 et/ou intérieure 53 dudit segment courbe 51 peut être cémentée, nitrurée ou traitée selon toute méthode connue de l'homme de l'art et notamment, être revêtue d'une couche de matériau dur comme, par exemple, du carbone amorphe de type DLC (Diamond Like Coating), lesdits traitements et/ou revêtements visant à accroître la résistance mécanique à la fatigue et/ou à l'usure desdites surfaces extérieure 52 et/ou intérieure 53.

La roue dentée 5 comporte au moins une piste de roulement 50 qui est constituée d'au moins un clip 55, aménagé à l'une au moins des extrémités du segment courbe 51.

Le clip 55 vient se fixer à l'une ou l'autre des extrémités de la surface extérieure courbe 54 aménagée sur ladite roue dentée 5 en s'accrochant à une forme en crochet ou en protubérance 56 que comporte ladite roue 5 au voisinage de ladite extrémité de sa surface extérieure courbe 54, ladite forme en crochet ou en protubérance 56 étant complémentaire à celle du clip 55 de sorte à pouvoir coopérer avec lui.

La piste de roulement 50 comporte un segment courbe 51 qui est maintenu latéralement sur la surface extérieure courbe 54 aménagée sur la roue dentée 5 par au moins une butée d'arrêt latéral constituée d'au moins un rebord 57 qui empêche ledit segment 51 de se déplacer parallèlement à son axe de courbure.

Chaque rebord 57 de la butée d'arrêt latéral est aménagé sur au moins un coté de la surface extérieure courbe 54 que comporte la roue dentée 5.

Chaque rebord 57 comporte des embrèvements 58 au niveau des pieds des dents 59 que comporte la roue dentée 5.

Les embrèvements 58 permettent notamment de laisser le passage à une roue de taillage ou de rectification lors de l'usinage desdites dents 59, ou sont réalisés consécutivement au passage de ladite roue de taillage ou de rectification.

La surface intérieure 53 du segment courbe 51 comporte des plots d'arrêt longitudinal et/ou latéral 60 qui coopèrent par imbrication avec des plots ou rainures 61 en relief inverse que comporte la surface extérieure courbe 54 aménagée sur la roue dentée 5 (figures 6 et 7).

Les plots d'arrêt 60 que comporte ledit segment courbe 51 et/ou les plots ou rainures 61 que comporte ladite surface extérieure courbe 54 permettent de supporter ledit segment courbe 51 durant le fonctionnement du moteur à taux de compression variable 10, tout en évitant tout phénomène de reptation qui conduirait ledit segment courbe 51 à se déplacer dans le sens de sa longueur par rapport à ladite surface extérieure courbe 54.

L'une au moins des extrémités du segment courbe 51 de la piste de roulement 50 peut être fixée à la roue dentée 5 par l'intermédiaire d'une liaison d'ancrage mécanique 62 qui peut être, par exemple, selon un mode particulier de réalisation un rivet, une vis, une goupille, ou tout autre moyen de fixation connu de l'homme de l'art (figures 8 et 9).

La piste de roulement 50 comporte sur la surface intérieure 53 du segment courbe 51 et/ou sur la surface extérieure courbe 54 aménagée sur la roue dentée 5 des motifs géométriques en relief ou en creux 63 qui permettent à de l'huile de lubrification que contient le carter du moteur à taux de compression variable 10 de circuler entre ladite surface intérieure 53 et ladite surface extérieure courbe 54 (figure 3).

On a montré en figures 10 et 11 la piste de roulement 50 dont le segment courbe 51 coopère avec une cale d'épaisseur 64 qui est intercalée entre ledit segment et la surface extérieure courbe 54 aménagée sur la roue dentée 5.

Ladite cale d'épaisseur 64 permet notamment de régler la rigidité dudit segment courbe 51 en-en réglant l'épaisseur, la somme des épaisseurs de ladite cale et dudit segment étant prévue pour positionner la surface de contact entre ledit segment et la piste de roulement aménagée sur l'organe de transmission 3 ou sur l'organe de commande 7 au voisinage du cercle primitif de l'engrenage que constituent la roue dentée 5 et lesdits organes 3 et 7.

On note que ladite cale d'épaisseur 64 peut être constituée d'un matériau différent de celui de la piste de roulement 50 ou de la roue dentée 5. Selon une variante de réalisation ladite cale d'épaisseur peut également être collée soit sur la surface intérieure 53 de la piste de roulement 50 soit sur la surface extérieure courbe 54 de la roue dentée 5, soit sur les deux.

Le segment courbe 51 de la piste de roulement 50 est maintenu longitudinalement sur la surface extérieure courbe 54 aménagée sur la roue dentée 5 par au moins une butée d'arrêt longitudinal, non représentée, qui empêche ledit segment de tourner autour de son axe de courbure.

Ladite butée d'arrêt longitudinal peut être, par exemple, constituée d'un pion cylindrique logé d'une part dans ledit segment courbe 51 et d'autre part dans la roue dentée 5.

A partir de la description qui précède, on comprend comment se monte la piste de roulement 50 selon l'invention sur la roue dentée 5 du moteur à taux de compression variable 10, par exemple en relation avec les figures 4 et 5.

Un premier clip 55 aménagé à une première extrémité du segment courbe 51 constituant la piste de roulement 50 selon l'invention est accroché sur un premier crochet 56 que comporte la roue dentée 5 au voisinage d'une première extrémité de sa surface extérieure courbe 54, puis ledit segment 51 est sollicité en extension dans son élasticité jusqu'à ce qu'un deuxième clip 55 aménagé à sa deuxième extrémité vienne s'accrocher sur le crochet opposée 56 réalisé au voisinage de la deuxième extrémité de la surface extérieure courbe 54 de ladite roue 5.

Une fois ce montage effectué, ladite piste de roulement 50 peut être rectifiée directement sur ladite roue dentée 5 de sorte à régler le diamètre extérieur de ladite piste de roulement 50 jusqu'à obtenir le jeu de fonctionnement recherché entre les dents 59 de ladite roue 5 et celles des organes de transmission 3 et de commande 7 avec lesquelles elle coopère.

On note qu'il est possible de préparer des pistes de roulement 50 de différentes épaisseurs que l'on peut ensuite appairer avec la roue dentée 5 de manière à régler le jeu aux dentures du système d'engrenage constitué de ladite roue et des organes de transmission 3 et de commande 7 sans avoir à rectifier lesdites pistes après leur montage sur ladite roue, l'épaisseur des pistes de roulement à appairer avec la roue dentée 5 étant déterminée par la cote sur pige mesurée des dentures de ladite roue.

Il doit d'ailleurs être entendu que la description qui précède n'a été donnée qu'à titre d'exemple et quelle ne limite nullement le domaine de l'invention dont on ne sortirait pas en remplaçant les détails d'exécution décrits par tout autre équivalent.

## Revendications

1. Moteur à taux de compression variable avec une piste de roulement (50) à fixation par clip, ledit moteur comprenant un carter cylindres (100) recevant un organe de transmission (3) muni d'une crémaillère et sur lequel est fixé un piston de combustion (2), un organe de commande (7) muni d'une crémaillère et relié à un vérin de commande hydraulique à double effet (8), une roue dentée (5) qui coopère avec l'organe de transmission (3) d'une part et avec l'organe de commande (7) d'autre part pour transmettre le travail mécanique produit par la combustion sur le piston de combustion (2) via une bielle (6) reliée à un vilebrequin (9), **caractérisé en ce que** la piste de roulement (50) comprend :
• au moins un segment courbe (51) dont la surface extérieure (52) coopère avec une piste de roulement aménagée sur l'organe de transmission (3) ou sur l'organe de commande (7) du moteur à taux de compression variable (10) et dont la surface intérieure (53) est maintenue en contact avec une surface extérieure courbe (54) aménagée sur la roue dentée (5) dudit moteur ;
• au moins un clip (55), aménagé à l'une au moins des extrémités du segment courbe (51), et qui se fixe à l'une ou l'autre des extrémités de la surface extérieure courbe (54) aménagée sur la roue dentée (5) en s'accrochant à une forme en crochet ou en protubérance (56) que comporte ladite roue au voisinage de ladite extrémité de sa surface extérieure courbe (54), ladite forme en crochet ou en protubérance (56) étant complémentaire à celle du clip (55) de sorte à pouvoir coopérer avec lui.

2. Moteur à taux de compression variable avec une piste de roulement à fixation par clip suivant la revendication 1, **caractérisée en ce que** le segment courbe (51) est maintenu latéralement sur la surface extérieure courbe (54) aménagée sur la roue dentée (5) par au moins une butée d'arrêt latéral (57) qui empêche ledit segment (51) de se déplacer parallèlement à son axe de courbure.

3. Moteur à taux de compression variable avec une piste de roulement à fixation par clip suivant la revendication 2, **caractérisée en ce que** la butée d'arrêt latéral est constitué d'au moins un rebord (57) aménagé sur au moins un coté de la surface extérieure courbe (54) de la roue dentée (5).

4. Moteur à taux de compression variable avec une piste de roulement à fixation par clip suivant la revendication 3, **caractérisée en ce que** le rebord (57) aménagé sur au moins un coté de la surface extérieure courbe (54) de la roue dentée (5) comporte des embrèvements (58) au niveau des pieds des dents (59) que comporte la roue dentée.

5. Moteur à taux de compression variable avec une piste de roulement à fixation par clip suivant la revendication 1, **caractérisée en ce que** la surface intérieure (53) du segment courbe (51) comporte des plots d'arrêt longitudinal et/ou latéral (60) qui coopèrent par imbrication avec des plots ou rainures (61) en relief inverse que comporte la surface extérieure courbe (54) aménagée sur la roue dentée (5).

6. Moteur à taux de compression variable avec une piste de roulement à fixation par clip suivant la revendication 1, **caractérisée en ce que** l'une au moins des extrémités du segment courbe (51) est fixée à la roue dentée (5) par l'intermédiaire d'une liaison d'ancrage mécanique (62).

7. Moteur à taux de compression variable avec une piste de roulement à fixation par clip suivant la revendication 1, **caractérisée en ce que** la surface intérieure (53) du segment courbe (51) et/ou la surface extérieure courbe (54) aménagée sur la roue dentée (5) comporte des motifs géométriques en relief ou en creux (63) qui permettent à de l'huile de lubrification que contient le carter du moteur à taux de compression variable (10) de circuler entre ladite surface intérieure (53) et ladite surface extérieure courbe (54).

8. Moteur à taux de compression variable avec une piste de roulement à fixation par clip suivant la revendication 1, **caractérisée en ce que** le segment courbe (51) coopère avec une cale d'épaisseur (64) qui est intercalée entre ledit segment (51) et la surface extérieure courbe (54) aménagée sur la roue dentée (5).

9. Moteur à taux de compression variable avec une piste de roulement à fixation par clip suivant la revendication 1, **caractérisée en ce que** le segment courbe (51) est maintenu longitudinalement sur la surface extérieure courbe (54) aménagée sur la roue dentée (5) par au moins une butée d'arrêt longitudinal qui empêche ledit segment (51) de tourner autour de son axe de courbure.

## Patentansprüche

1. Motor mit variablem Verdichtungsverhältnis mit einem Fahrweg (50) mit Klippbefestigung, wobei der Motor ein Zylinderkurbelgehäuse (100) umfasst, das Folgendes aufnimmt: eine Übertragungseinrichtung (3), die mit einer Zahnstange ausgestattet ist und auf der ein Verbrennungskolben (2) befestigt ist, eine Steuereinrichtung (7), die mit einer Zahnstange ausgestattet ist und mit einem hydraulischen, doppelt wirkenden Steuerzylinder (8) verbunden ist, ein Zahnrad (5), das einerseits mit der Übertragungseinrichtung (3) und andererseits mit der Steuereinrichtung (7) zusammenwirkt, um die mechanische Arbeit, die durch die Verbrennung an dem Verbrennungskolben (2) erzeugt wird, über eine Kurbelstange (6) zu übertragen, die mit einer Kurbelwelle (9) verbunden ist, **dadurch gekennzeichnet, dass** der Fahrweg (50) Folgendes umfasst:
• mindestens einen gekrümmten Abschnitt (51), dessen Außenfläche (52) mit einem Fahrweg zusammenwirkt, der auf der Übertragungseinrichtung (3) oder auf der Steuereinrichtung (7) des Motors mit variablem Verdichtungsverhältnis (10) angeordnet ist und dessen Innenfläche (53) in Kontakt mit einer gekrümmten Außenfläche (54) gehalten wird, die auf dem Zahnrad (5) des Motors angeordnet ist;
• mindestens einen Klipp (55), der mindestens an dem einen der Enden des gekrümmten Abschnitts (51) angeordnet ist und der an dem einen oder dem anderen Ende der gekrümmten Außenfläche (54) befestigt wird, die auf dem Zahnrad (5) angeordnet ist, indem er sich an eine Hakenform oder eine Ausbeulung (56) anhängt, die das Rad in der Nähe des Endes seiner gekrümmten Außenfläche (54) umfasst, wobei die Hakenform oder Ausbeulung (56) zu der des Klipps (55) komplementär ist, um damit zusammenwirken zu können.

2. Motor mit variablem Verdichtungsverhältnis mit einem Fahrweg mit Klippbefestigung nach Anspruch 1, **dadurch gekennzeichnet, dass** der gekrümmte Abschnitt (51) durch mindestens einen seitlichen Anschlag (57), der den Abschnitt (51) an einer Verschiebung parallel zu seiner Krümmungsachse hindert, seitlich an der gekrümmten Außenfläche (54) gehalten wird, die auf dem Zahnrad (5) angeordnet ist.

3. Motor mit variablem Verdichtungsverhältnis mit einem Fahrweg mit Klippbefestigung nach Anspruch 2, **dadurch gekennzeichnet, dass** der seitliche Anschlag aus mindestens einer Kante (57) besteht, die auf mindestens einer Seite der gekrümmten Außenfläche (54) des Zahnrads (5) angeordnet ist.

4. Motor mit variablem Verdichtungsverhältnis mit einem Fahrweg mit Klippbefestigung nach Anspruch 3, **dadurch gekennzeichnet, dass** die Kante (57), die auf mindestens einer Seite der gekrümmten Außenfläche (54) des Zahnrads (5) angeordnet ist, Senkungen (58) auf der Ebene der Füße der Zähne (59) umfasst, die das Zahnrad umfasst.

5. Motor mit variablem Verdichtungsverhältnis mit einem Fahrweg mit Klippbefestigung nach Anspruch 1, **dadurch gekennzeichnet, dass** die Innenfläche (53) des gekrümmten Abschnitts (51) längslaufende und/oder seitliche Haltekontakte (60) umfasst, die durch ein Ineinandergreifen mit den Kontakten oder Nuten (61) in umgekehrter Lage zusammenwirken, welche die gekrümmte Außenfläche (54) umfasst, die auf dem Zahnrad (5) angeordnet ist.

6. Motor mit variablem Verdichtungsverhältnis mit einem Fahrweg mit Klippbefestigung nach Anspruch 1, **dadurch gekennzeichnet, dass** mindestens eines der Enden des gekrümmten Abschnitts (51) durch eine Verbindung mit mechanischer Verankerung (62) an dem Zahnrad (5) befestigt ist.

7. Motor mit variablem Verdichtungsverhältnis mit einem Fahrweg mit Klippbefestigung nach Anspruch 1, **dadurch gekennzeichnet, dass** die Innenfläche (53) des gekrümmten Abschnitts (51) und/oder die gekrümmte Außenfläche (54), die auf dem Zahnrad (5) angeordnet ist, erhöhte oder eingesenkte geometrische Motive (63) umfasst, die ermöglichen, dass das Schmieröl, welches das Kurbelgehäuse des Motors mit variablem Verdichtungsverhältnis (10) enthält, zwischen der Innenfläche (53) und der gekrümmten Außenfläche (54) zirkuliert.

8. Motor mit variablem Verdichtungsverhältnis mit einem Fahrweg mit Klippbefestigung nach Anspruch 1, **dadurch gekennzeichnet, dass** der gekrümmte Abschnitt (51) mit einer Unterlegplatte (64) zusammenwirkt, die zwischen dem Abschnitt (51) und der gekrümmten Außenfläche (54) eingefügt wird, die auf dem Zahnrad (5) angeordnet ist.

9. Motor mit variablem Verdichtungsverhältnis mit einem Fahrweg mit Klippbefestigung nach Anspruch 1, **dadurch gekennzeichnet, dass** der gekrümmte Abschnitt (51) durch mindestens einen längslaufenden Anschlag, der den Abschnitt (51) daran hindert, sich um seine Krümmungsachse zu drehen, längs auf der gekrümmten Außenfläche (54) gehalten wird, die auf dem Zahnrad (5) angeordnet ist.

## Claims

1. A variable compression ratio engine with a travel track (50) having clip attachment, said engine including a cylinder block (100) receiving a transmission device (3) provided with a rack and to which is attached a combustion piston (2), a control device (7) provided with a rack, and connected to a double-action hydraulic control jack (8), a toothed wheel (5) which cooperates with the transmission device (3), on the one hand, and with the control device (7), on the other hand, in order to transmit the mechanical work produced by the combustion to the combustion piston (2) via a connecting rod (6) connected to a crankshaft (9), **characterized in that** the travel track (50) includes:
• at least one curved segment (51), the outer surface of which (52) cooperates with a travel track provided on the transmission device (3) or on the control device (7) of the variable compression ratio engine (10), and the inner surface (53) of which is retained in contact with a curved outer surface (54) provided on the toothed wheel (5) of said engine; .
• at least one clip (55) provided on at least one of the ends of the curved segment (51), and which is attached to one or the other of the ends of the outer curved surface (54) provided on the toothed wheel (5) by becoming hooked to a hook- or protuberance-shaped form (56), which said wheel comprises in the vicinity of said end of the outer curved surface (54) thereof, said hook- or protuberance-shaped form (56) being complementary to that of the clip (55) so that it can cooperate with it.

2. The variable compression ratio engine with a travel track having clip attachment according to Claim 1, **characterized in that** the curved segment (51) is retained laterally on the curved outer surface (54) provided on the toothed wheel (5) by at least one lateral stop abutment (57) which prevents said segment (51) from moving parallel to the axis of curvature thereof.

3. The variable compression ratio engine with a travel track having clip attachment according to Claim 2, **characterized in that** the lateral stop abutment consists of at least one edge (57) provided on at least one side of the curved outer surface (54) of the toothed wheel (5).

4. The variable compression ratio engine with a travel track having clip attachment according to Claim 3, **characterized in that** the edge (57) provided on at least one side of the outer curved surface (54) of the toothed wheel (5) comprises notches (58) at the level of the bases of the teeth (59) which the toothed wheel comprises.

5. The variable compression ratio engine with a travel track having clip attachment according to Claim 1, **characterized in that** the inner surface (53) of the curved segment (51) comprises longitudinal and/or lateral stop studs (60) which cooperate by imbrication with studs or grooves (61) in reverse relief which the outer curved surface (54) provided on the toothed wheel (5) comprises.

6. The variable compression ratio engine with a travel track having clip attachment according to Claim 1, **characterized in that** at least one of the ends of the curved segment (51) is attached to the toothed wheel (5) by a mechanical anchoring link (62).

7. The variable compression ratio engine with a travel track having clip attachment according to Claim 1, **characterized in that** the inner surface (53) of the curved segment (51) and/or the outer curved surface (54) provided on the toothed wheel (5) comprise(s) raised or hollow geometric patterns (63) which allow lubricating oil which the engine block of the variable compression ratio engine (10) contains to circulate between said inner surface (53) and said outer curved surface (54).

8. The variable compression ratio engine with a travel track having clip attachment according to Claim 1, **characterized in that** the curved segment (51) cooperates with a spacer (64) which is inserted between said segment (51) and the outer curved surface (54) provided on the toothed wheel (5).

9. The variable compression ratio engine with a travel track having clip attachment according to Claim 1, **characterized in that** the curved segment (51) is retained longitudinally on the outer curved surface (54) provided on the toothed wheel (5) by at least one longitudinal stop abutment which prevents said segment (51) from rotating about the axis of curvature thereof.
